# EUROPEAN PATENT SPECIFICATION

(11) **EP 3 156 830 B1**
(45) Date of publication and mention of the grant of the patent: **30.12.2020**
(21) Application number: 15806187.9
(22) Date of filing: 10.06.2015
(51) Int. Cl.: G02B 6/02, H04B 10/2543, H04B 10/291, G02B 6/036, H01S 3/067, H01S 3/10, H01S 3/16, H01S 3/30

(54) **OPTICAL TRANSMISSION SYSTEM**
OPTISCHES ÜBERTRAGUNGSSYSTEM
SYSTÈME DE TRANSMISSION OPTIQUE

(30) Priority: 13.06.2014 JP 2014122100
(43) Date of publication of application: 19.04.2017
(73) Proprietor: Sumitomo Electric Industries, Ltd., Osaka-shi, Osaka 541-0041 (JP)
(72) Inventor: YAMAMOTO, Yoshinori, Yokohama-shi Kanagawa 244-8588 (JP); HIRANO, Masaaki, Yokohama-shi Kanagawa 244-8588 (JP)
(74) Representative: Hoffmann Eitle
(86) International application number: PCT/JP2015/066775
(87) International publication number: WO 2015/190533

(56) References cited:
- JP-A- 2014 067 020
- US-A1- 2011 222 863
- US-B1- 7 689 085
- US-B1- 7 929 818
- YOSHINORI YAMAMOTO ET AL.: 'OSNR Performance of A_<eff>-Enlarged Low-Attenuation Pure-Silica-Core Fiber for Repeaterless Transmission with Distributed Raman Amplification' 2008 NEN IEICE COMMUNICATIONS SOCIETY CONFERENCE KOEN RONBUNSHU 2 02 September 2008, page 220, XP008183488
- YOSHINORI YAMAMOTO ET AL.: 'Large Aeff Pure-Silica-Core Fiber with Low Similar Splice Loss for Terrestrial Transmission Lines' OPTICAL FIBER COMMUNICATIONS CONFERENCE AND EXHIBITION (OFC), 2014 March 2014, pages 1 - 3, XP032632998

## Description

### Technical Field

The present invention relates to an optical fiber and an optical transmission system.

### Background Art

In an optical transmission system using the digital coherent detection technology, it is important to improve an optical signal-to-noise ratio (OSNR). By improving the OSNR, it is possible to increase transmission capacity of an optical transmission system and to increase a transmittable distance and a repeater interval (span length).

To improve the OSNR, it is effective to reduce transmission loss of a transmission optical fiber, and to decrease nonlinearity by increasing an effective area Aeff of the optical fiber so as to reduce optical power density in the core.

Standard single-mode optical fiber compliant to ITU-T G.652 recommendation has a transmission loss of approximately 0.19 dB/km at a wavelength of 1550 nm and Aeff of approximately 80 µm² at a wavelength of 1550 nm. Compared with this fiber, the optical fiber described in Patent Literature 1 has a transmission loss of 0.18 dB/km or less at a wavelength of 1550 nm and Aeff of 110 µm² or more at a wavelength of 1550 nm.

In general, in an optical transmission system, optical fibers are deployed between a transmitter and the first stage repeater, between a repeater and the next stage repeater, and the final stage repeater and a receiver, and transmit an optical signal from the transmitter to the receiver. Typically, the optical signal is amplified by an Er-doped optical fiber amplifier (EDFA) disposed in a repeater so that transmission loss caused between repeaters (one span) is completely compensated.

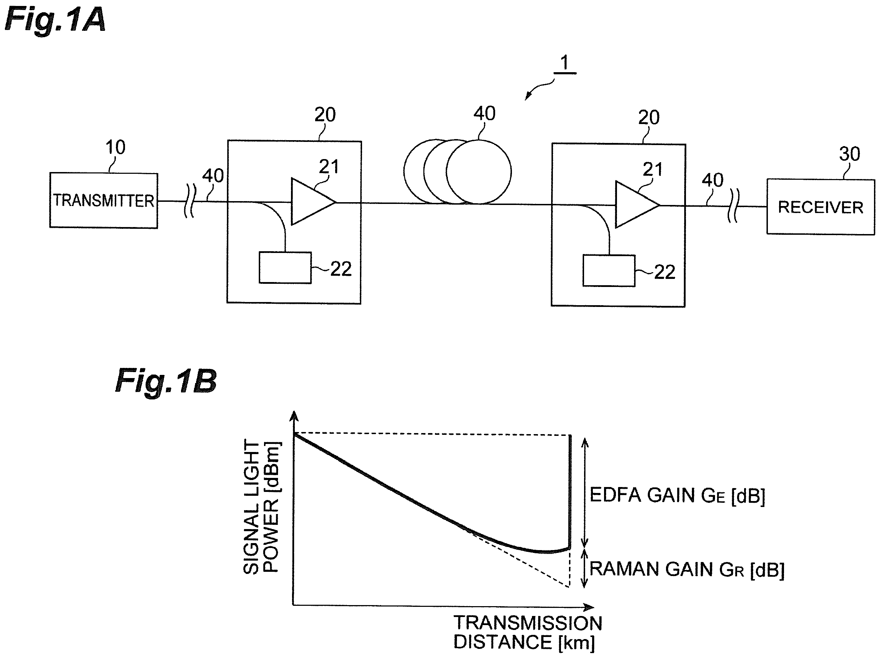

On the other hand, in order to improve the OSNR of the optical transmission system, Raman amplification, which is excellent in noise characteristics, is used in combination with an EDFA in some cases. Fig. 1A is a diagram showing a configuration of an optical transmission system 1 in which Raman amplification and the EDFA are used in combination. The optical transmission system 1 includes a transmitter 10, a repeater 20, and a receiver 30, and between these devices are deployed optical fibers 40 as optical fiber transmission lines. Each repeater 20 includes an EDFA 21 and a pumping light source 22 for Raman amplification. A Raman amplifier comprises the pumping light source 22 for Raman amplification in each repeater 20 and the optical fiber 40 through which pumping light for Raman amplification emitted from the light source 22 for Raman amplification propagates.

The light source 22 for Raman amplification in each repeater 20 amplifies signal light by causing the pumping light to propagate in the same or opposite direction of the propagation direction of the signal light and thus to create stimulated Raman scattering in the transmission optical fiber 40. A gain of the Raman amplification in an optical fiber made of silica-based glass has a peak at a wavelength which is approximately 100 nm longer than the pumping light wavelength. For example, in order to Raman-amplify the signal light is in the C band (wavelength of 1530 nm to 1565 nm), the pumping light wavelength is set near a wavelength of 1450 nm in many cases.

However, because Raman amplification uses stimulated Raman scattering, which is one of nonlinear phenomena, there is a problem that amplification efficiency decreases as Aeff is increased.

Patent Literature 2 describes an optical fiber and an optical transmission system which improve OSNR in a wavelength division multiplexed optical transmission system which uses Raman amplification and is for a long repeating distance. Further, this document describes that Aeff at a wavelength of 1550 nm must be 150 µm² or less in order to keep the pumping light power in a practical range (some watts or less).

Patent Literature 3 describes the relationship between transmission loss and Aeff at a wavelength of 1550 nm, and the relationship needs to be satisfied to improve the OSNR and at the same time to suppress increase in power of pumping light for Raman amplification in the optical transmission system using Raman amplification.

Patent Document US 2011/ 0222863 A1 discloses a long haul optical fiber transmission system including a transmitter having a modulated bit rate of at least 40 Gb/s. A receiver is optically coupled to the transmitter with a composite optical fiber span. The optical fiber includes a first optical fiber coupled to the transmitter and a second optical fiber coupled to the first optical fiber. The first optical fiber has an effective area of at least 120 [mu]m2, an attenuation of less than 0.180 dB/km, and a length L1 from about 30 km to about 90 km. The second optical fiber has an effective area of less than 120 [mu]m2, an attenuation of less than 0.180 dB/km, and a length L2. The sum of L1 and L2 is at least 160 km. The composite optical fiber span does not include a repeater along the length of the span between the transmitter and the receiver or any rare earth dopants.

Patent document JP 2014 067020 A discloses an optical fiber including a core part and a cladding part, and having, at a wavelength of 1550 nm, an effective cross section Aeff of 100 µm or less, a wavelength dispersion Disp of +19.0 ps/nm/km or more and +22 ps/nm/km or less, and a performance index FOM of +3.2 dB or more represented by a formula FOM=5 log{|Disp|^{∗}Leff}-10 log{Leff/Aeff}-100α where a Leff represents effective length and α represents transmission loss.

Patent document US 7929818 B1 discloses an optical waveguide fiber comprising: (i) a Ge free core having an effective area of 100 µm<2 >to 150 µm<2>, at 1550 nm wavelength, said core comprising: (a) a central core region extending radially outwardly from a centerline to a radius rl, and having a relative refractive index percent profile Δ1(r) in % measured relative to pure silica, wherein -0.1%≦Δ1(r)≦0.12%, wherein the central core region has a maximum relative refractive index percent, Δ1MAX; (b) a first annular core region surrounding and directly adjacent to the central core region, having an α value 1.5≦α≦10, and extending to an outer radius r2, wherein 6 µm≦r2≦10 µm, and having a relative refractive index percent profile, Δ2(r) in % measured relative to pure silica, a minimum relative refractive index Δ2MIN, a maximum relative refractive index Δ2MAX and the relative refractive index measured at a radius r=2 µm, wherein -0.45≦Δ2≦0; -0.25≧Δ2MIN≧-0.45 and Δ1MAX≧Δ2(r=2 µm); (c) a fluorine doped second annular region surrounding and directly adjacent to the first annular core region and extending to a radius 20 µm≦r3≦30 µm and having a negative relative refractive index percent profile, Δ3(r) in %, measured relative to pure silica, with a minimum relative refractive index percent Δ3MIN and -0.5%<Δ3MIN<-0.25%; and Δ3MIN≦Δ2MIN (ii) a cladding surrounding the core and having a relative refractive index percent Δ4(r) in % measured relative to pure silica and a minimum refractive index delta Δ4MIN, and -0.4%<Δ4<-0.2%; wherein the relative refractive index profile of the optical fiber is selected to provide attenuation of no more than 0.17 dB/km at the 1550 nm wavelength.

Document "OSNR Performance of Aeff-enlarged Low-Attenuation Pure-Silica-Core Fiber for Repeaterless Transmission with Distributed Raman Amplification", 2008 Nen IEICE Communications Society Conference Koen Ronbunshu 2, (20080902) relates to Core Fiber for Repeaterless Transmission with Distributed Raman Amplification.

### Citation List

### Patent Literature

Patent Literature 1: Japanese Unexamined Patent Publication No. 2005-202440
Patent Literature 2: Japanese Unexamined Patent Publication No. 2011-039109
Patent Literature 3: Japanese Unexamined Patent Publication No. 2011-197667

### Summary of Invention

### Technical Problem

The inventors have studied about a conventional optical transmission system using Raman amplification, and as a result, have discovered the following issues. That is, Patent Literature 2 does not disclose an optical fiber for improving OSNR in an optical transmission system in which Raman amplification and an EDFA are combined. Patent Literature 3 assumes that transmission loss is compensated all by Raman amplification, and does not give consideration to optical fiber characteristics at a pumping light wavelength.

The present invention has been made to solve the above issues, and an object of the present invention is to provide an optical transmission system which includes: an optical fiber transmission line using an optical fiber; a Raman amplifier; and an EDFA and which can improve OSNR as claimed by the claim set.

### Solution to Problem

The optical fiber in the optical transmission system according to the present invention includes: a core extending along a predetermined axis; and a cladding provided on an outer periphery of the core, wherein each of the core and the cladding is configured to satisfy the following formula, when Aeff₁₄₅₀ [µm²] is an effective area at a wavelength of 1450 nm; α₁₄₅₀ [/km] is a transmission loss at a wavelength of 1450 nm; and α_{1550_dB} [dB/km] is a transmission loss at a wavelength of 1550 nm. $\frac{0.44}{{α}_{1550 _ dB}} < {Aeff}_{1450} ⋅ {α}_{1450} < \frac{22}{{α}_{1550 _ dB} ⋅ 100 - 12}$ (1)

### Advantageous Effects of Invention

The present invention can improve the OSNR in an optical transmission system in which Raman amplification and an EDFA are combined.

### Brief Description of Drawings

Figs. 1A and 1B are diagrams showing an configuration of an optical transmission system 1 which uses Raman amplification and an EDFA in combination and showing a signal light power diagram in one span.
Fig. 2 is a table which summarizes specifications of each of samples of an optical fiber to be used in an optical transmission system according to an embodiment of the present invention and comparative examples.
Fig. 3 is a table which summarizes specifications of each of the samples of an optical fiber to be used in an optical transmission system according to an embodiment of the present invention and the comparative examples.
Fig. 4 is a table which summarizes specifications of each of the samples of an optical fiber to be used in an optical transmission system according to an embodiment of the present invention and the comparative examples.
Fig. 5 is a diagram showing an example of a refractive index profile applicable to an optical fiber to be used in an optical transmission system according to an embodiment of the present invention.
Fig. 6 is a diagram showing another example of a refractive index profile applicable to an optical fiber to be used in an optical transmission system according to an embodiment of the present invention.
Figs. 7A to 7F are diagrams showing a modified example of a refractive index profile of a core of an optical fiber to be used in an optical transmission system according to an embodiment of the present invention.
Fig. 8 is a graph showing dependence of each of Aeff₁₄₅₀ · α₁₄₅₀, 22 / (α_{1550_dB} × 100 - 12), and 0.44 / α_{1550_dB} on α_{1450_dB} under predetermined conditions.
Fig. 9 is a graph showing dependence of each of Aeff₁₄₅₀·α₁₄₅₀, 22 / (α_{1550_dB} × 100 - 12), and 0.44 / α_{1550_dB} on Aeff₁₄₅₀ under predetermined conditions.

### Description of Embodiments

### [Description of an Embodiment of the Present Invention]

First, practical aspects of the present invention will be listed and described.

As a first aspect of the present embodiment, the optical fiber includes a core extending along a predetermined axis and a cladding provided on an outer periphery of the core. In particular, each of the core and the cladding is configured to satisfy the above Formula (1), when an effective area at a wavelength of 1450 nm is Aeff₁₄₅₀ [µm²], a transmission loss at a wavelength of 1450 nm is α₁₄₅₀ [/km], and a transmission loss at a wavelength of 1550 nm is α_{1550_dB} [dB/km]. Note that the suffix "dB" of the transmission loss α represents decibel display [dB/km] (α_{dB} = 10α × log₁₀(e)) of the transmission loss α [/km].

As a second aspect applicable to the above first aspect, each of the core and the cladding may be configured to satisfy the following Formula (2), when the effective area at a wavelength of 1550 nm is Aeff₁₅₅₀ [µm²], and the transmission loss at a wavelength of 1550 nm is α₁₅₅₀ [/km].${Aeff}_{1550} ⋅ {α}_{1550} > 2.2$ (2)

As a third aspect applicable to at least any one of the above first and second aspects, it is preferable that a transmission loss α_{1550_dB} at a wavelength of 1550 nm be 0.17 dB/km or less. Further, as a fourth aspect applicable to at least any of one the above first to third aspects, it is preferable that an effective area Aeff₁₅₅₀ at a wavelength of 1550 nm be 70 µm² to 160 µm².

As a fifth aspect applicable to at least any one of the above first to fourth aspects, it is preferable that a relative refractive index difference of the core with respect to pure silica be -0.1% to +0.1%.

As a sixth aspect applicable to at least any one of the above first to fifth aspects, it is preferable that a transmission loss α_{1450_dB} at a wavelength of 1450 nm is 0.19 to 0.22 dB/km or less. Further, as a seventh aspect applicable to at least any one of the above first to sixth aspects, it is preferable that an effective area Aeff₁₄₅₀ at a wavelength of 1450 nm be 60 µm² to 140 µm².

As an eighth aspect applicable to at least any one of the above first to seventh aspects, it is preferable that a relative refractive index difference of the core with respect to a reference area of the cladding be 0.18 to 0.45% and that a diameter of the core be 9 µm to 15 µm. Note that, in the present specification, when the cladding is configured with a single layer, the whole cladding is the reference area; however, when the cladding is configured with a plurality of layers, the outermost layer of the layers constituting the cladding is defined as the reference area.

As a ninth aspect applicable to at least any one of the above first to eighth aspects, it is preferable that a fiber cutoff wavelength be 1600 nm or less. Further, as a tenth aspect applicable to at least any one of the above first to ninth aspects, the cladding may be configured, as described above, with an inner cladding surrounding an outer periphery of the core and an outer cladding surrounding the outer periphery of the inner cladding. In this configuration, it is preferable that a refractive index of the outer cladding be smaller than the refractive index of the core and be greater than the refractive index of the inner cladding. As an eleventh aspect applicable to at least any one of the above first to tenth aspects, it is preferable that the ratio b/a of a diameter 2a of the core to an outer diameter 2b of the inner cladding be 3.0 to 5.0.

Further, according to the invention, the optical transmission system satisfies the following Formula (3), when the effective area of the above optical fiber at a wavelength of the pumping light for Raman amplification is Aeff_{P} [µm²], the transmission loss of the above optical fiber transmission line at the wavelength of the pumping light for Raman amplification is α_{P} [1/km] ([1/km] and [/km] represent the same unit), a transmission loss of the above optical fiber transmission line at a signal light wavelength is α_{SdB} [dB/km], a span length of the above optical fiber transmission line is L [km], and a power of pumping light for Raman amplification is P_{Pump} [mW].$\frac{0.11}{{Aeff}_{P} ⋅ {α}_{P}} ⋅ {P}_{Pump} < {α}_{SdB} ⋅ L - \frac{0.11}{{Aeff}_{P} ⋅ {α}_{P}} ⋅ {P}_{Pump} < 0.19 L - 0.028 {P}_{Pump} - 1$ (3)

### [Details of the Embodiment of the Invention of the Present Application]

Hereinafter, a description will be given in detail on specific configurations of an optical fiber and an optical transmission system including the optical fiber with reference to the accompanying drawings. Note that, the present invention is not limited to these examples, and it is intended that the present invention is defined by the scope of the claims and includes all modifications within the scope of the claims.

An optical transmission system according to the present embodiment includes the configuration shown in the above-described Fig. 1A, and the optical fiber described below is applicable, as an optical fiber transmission line, to the optical fiber 40 of the optical transmission system 1 shown in Fig. 1A. Further, Fig. 1B shows a signal light power diagram in one span when pumping light for Raman amplification is made to propagate in the one span (a repeater section on which the optical fiber 40 is deployed) of the optical fiber transmission line in the direction opposite to the propagation direction of the signal light. In the optical transmission system 1 of Fig. 1A, the signal light obtains a Raman gain of G_{R} [dB] during propagation through the optical fiber 40 deployed on each span. Further, the signal light obtains an EDFA gain of G_{E} [dB] by the EDFA 21 disposed on the span's output end. Such a configuration completely compensates the transmission loss of the signal light caused in the one span.

First, a description will be given on a gain G_{R} and an ASE noise power P_{ASE_Raman} of the Raman amplification. The gain G_{R} [dB] which the signal light obtains by the Raman amplification for one span is expressed by the following Formula (4). In the formula, g_{R} [× 10⁻¹⁴ m/W] is Raman gain coefficient, Aeff_{P} [µm²] is an effective area at a pumping light wavelength, Leffp [km] is an effective length at a pumping light wavelength, and P_{Pump} [mW] is a power of input pumping light.${G}_{R} \left[dB\right] = 10 log \left[exp\left(\frac{{g}_{R}}{{Aeff}_{P}}⋅{L}_{effP}⋅{P}_{Pump}\right)\right] \approx \frac{0.11}{{Aeff}_{P} ⋅ {α}_{P}} ⋅ {P}_{Pump}$ (4)

The following Formula (5) represents Leff_{P}, when a repeater interval (span length) is represented by L [km], and a transmission loss at a pumping light wavelength is represented by α_{P} [1/km]. In the case that L is sufficiently long (some ten kilometers or more), Leff_{P} can be approximated by the following Formula (6).${Leff}_{P} = \left[1-exp\left(-{α}_{P}L\right)\right] / {α}_{P}$ (5) ${Leff}_{P} ∼ 1 / {α}_{P}$ (6)

The value g_{R} is determined substantially by material of the core, and in the case of a pure silica core fiber, in which substantially no impurity is added to the core, g_{R} is about 2.6 [× 10⁻¹⁴ m/W] and approximately constant.

Further, the following Formula (7) represents an ASE (Amplified Spontaneous Emission) noise power P_{ASE_Raman} [mW] caused by Raman amplification. In the formula, h = 6.63 × 10⁻³⁴ [Js] is Planck's constant, ν is a light frequency and is about 194 THz, Δv is a noise band and is, for example, about 12.5 GHz, and NF_{R} is a noise figure of the Raman amplification.${P}_{ASE _ Raman} = h ν Δ ν ⋅ {NF}_{R} ⋅ \left({G}_{R}-1\right)$ (7)

Next, a description will be given on a gain G_{E} and an ASE noise power P_{ASE_EDFA} of the EDFA. If it is assumed that the transmission loss in one span is completely compensated by the Raman amplification and the EDFA, the gain G_{R} [dB] to be obtained by the EDFA is expressed by the following Formula (8), in which the Raman amplification gain is substituted from the span total loss. In the formula, α_{SdB} [dB/km] is a transmission loss at the signal light wavelength.${G}_{E} \left[dB\right] = {α}_{SdB} ⋅ L - {G}_{R} \left[dB\right] \approx {α}_{SdB} ⋅ L - \frac{0.11}{{Aeff}_{P} ⋅ {α}_{P}} ⋅ {P}_{Pump}$ (8)

Further, the ASE noise power P_{ASE_EDFA} [mW] caused by the EDFA is expressed by the following Formula (9). In the formula, NF_{E} is a noise figure of the EDFA and is generally about 5 to 6 dB.${P}_{ASE _ EDFA} = h ν Δ ν ⋅ {NF}_{E} ⋅ \left({G}_{E}-1\right)$ (9)

Next, a description will be given on a phase shift amount caused by self-phase modulation and an allowable input signal light power. One of nonlinear phenomena generated in an optical fiber includes self-phase modulation. Because the self-phase modulation shifts the phase of the signal light and thus deteriorates transmission performance, it is necessary to keep the self-phase modulation to an allowable value or less in the optical transmission system. The following Formula (10) represents a phase shift amount φ_{SPM} [rad], for one span, caused by self-phase modulation in the case of the optical transmission system not using Raman amplification. In the formula, n₂ [10⁻²⁰m²/W] is a nonlinear refractive index, λ [nm] is a wavelength, Aeff_{S} [µm²] is an effective area at a signal light wavelength, P_{sig} [mW] is an input signal light power, and α_{S} [1/km] is a transmission loss at a signal light wavelength.${ϕ}_{SPM} = \frac{2 π}{λ} \frac{{n}_{2}}{{Aeff}_{S}} {L}_{effS} {P}_{Sig} \approx \frac{44 π}{λ} \frac{1}{{Aeff}_{S} {α}_{S}} {P}_{Sig}$ (10)

When the repeater interval (span length) is represented by L [km], the following Formula (11) represents Leff_{S}. In the case that L is sufficiently long (some ten kilometers or more), Leff_{S} can be approximated by the following Formula (12).${Leff}_{S} = \left[1-exp\left(-{α}_{S}L\right)\right] / {α}_{S}$ (11) ${Leff}_{S} ∼ 1 / {α}_{S}$ (12)

The value n₂ is substantially determined by material of the core, and in the case of a pure silica core fiber, in which substantially no impurity is added to the core, is 2.2 [× 10⁻²⁰m²/W] and approximately constant.

In the case that Raman amplification is used, a signal light power increases near the span's output end, and φ_{SPM} also increases accordingly. However, for example, in the case that signal light with an input signal light power of -2 dBm/ch is transmitted through an SSMF with a span length of 100 km, the difference of φ_{SPM} is as small as about 5% between the case of using Raman amplification with a pumping light power of 200 mW and the case of not using Raman amplification. Thus, the φ_{SPM} can be represented approximately by the above Formula (10) even when Raman amplification is used.

The φ_{SPM} allowable in an optical transmission system is, for example, 1 rad as an accumulated value all through the transmission line from the transmitter to the receiver. For example, in the case of a transmission line constituted by 50 spans, the allowable φ_{SPM} for one span is 0.02 rad. The maximum input signal light power P_{sig_max} [mW] with which the phase shift amount does not exceed a certain allowable amount φ_{SPM_max} [rad.] is expressed by the following Formula (13).${P}_{Sig _ max} = \frac{λ}{44 π} {Aeff}_{S} {α}_{S} ⋅ {ϕ}_{SPM _ max}$ (13)

Next, an optical fiber which improves OSNR will be described. The following Formula (14) represents the OSNR in the optical transmission system in which Raman amplification and an EDFA are combined, in the case that the input signal power is set to P_{sig_max} so that the phase shift amount caused by the self-phase modulation is an allowable amount φ_{SPM_max}.$OSNR = \frac{{P}_{sig _ max}}{{P}_{ASE _ EDFA} + {P}_{ASE _ Raman} ⋅ {G}_{E}}$ (14)

In general, in the optical transmission system in which Raman amplification and an EDFA are combined, the gain of the EDFA is greater than the gain of the Raman amplification. Further, because the noise characteristics of the EDFA are inferior to those of the Raman amplification (which means that the noise figure NF_{E} is greater than the noise figure NF_{R}), P_{ASE_EDFA} is greater than P_{ASE_Raman}. Therefore, in order to improve the OSNR, it is effective to keep P_{ASE_EDFA} small.

As understood from the above Formula (9), P_{ASE_EDFA} increases linearly with respect to G_{E}; therefore, in order to reduce P_{ASE_EDFA}, it is effective to keep G_{E} small. In addition, by keeping G_{E} small, it is possible to keep small a Raman ASE noise power P_{ASE_Raman}·G_{E} after being amplified by the EDFA.

Here, assume the signal light wavelength to be 1550 nm, and assume the pumping light wavelength to be 1450 nm. The effective area at a wavelength of 1550 nm is represented by Aeff₁₅₅₀ [µm²], the transmission loss at a wavelength of 1550 nm is represented by α₁₅₅₀ [1/km] and α_{1550_dB} [dB/km]. The effective area at a wavelength of 1450 nm is represented by Aeff₁₄₅₀ [µm²], and the transmission loss at a wavelength of 1450 nm are represented by α₁₄₅₀ [1/km] and α_{1450_dB} [dB/km].

In order to keep G_{E} small, it is preferable that Condition 1 represented by the following Formula (15) be satisfied. By satisfying Condition 1, G_{E} represented by the above Formula (8), in which L = 100 km and P_{Pump} = 200 mW, is kept to be 12 dB or less. It is possible to reduce G_{B} by 1 dB or more compared with a standard single mode fiber (Aeff₁₅₅₀ = 80 µm², Aeff₁₄₅₀ = 75 µm², α_{1550_dB} = 0.19 dB/km, α₁₄₅₀ = 0.053/km, g_{R} = 2.7 × 10⁻¹⁴ m/W). That is, it is possible to reduce P_{ASE_EDFA} by 1 dB or more and thus to improve the OSNR.${Aeff}_{1450} ⋅ {α}_{1450} < \frac{22}{{α}_{1550 _ dB} ⋅ 100 - 12}$ (15)

On the other hand, if G_{E} is kept to be excessively small, G_{R} increases to be comparable to G_{E}. In such a case, P_{ASE_Raman} becomes large, and as a result, the OSNR is deteriorated. To address this issue, it is preferable that Condition 2 represented by the following Formula (16) be satisfied. By satisfying Condition 2, the above Formula (4) and the above Formula (8) lead to the relationship G_{R} < G_{E}; thus, it is possible to suppress the increase in P_{ASE_Raman}. As a result, the OSNR can be improved.${Aeff}_{1450} ⋅ {α}_{1450} > \frac{0.44}{{α}_{1550 _ dB}}$ (16)

Further, improving P_{sig_max} is effective in improving the OSNR. Therefore, the above Formula (13) shows that it is preferable that Aeff_{S}·α_{S} be greater, and it is preferable that Condition 3 represented by the following Formula (17) be satisfied. By satisfying Condition 3, it is possible to make P_{sig_max} [mW] become 0.5 mW (-3 dBm) or more when φ_{SPM_max} = 0.02 rad, and it is thus possible to improve the OSNR. ${Aeff}_{1550} ⋅ {α}_{1550} > 2.2$ (17)

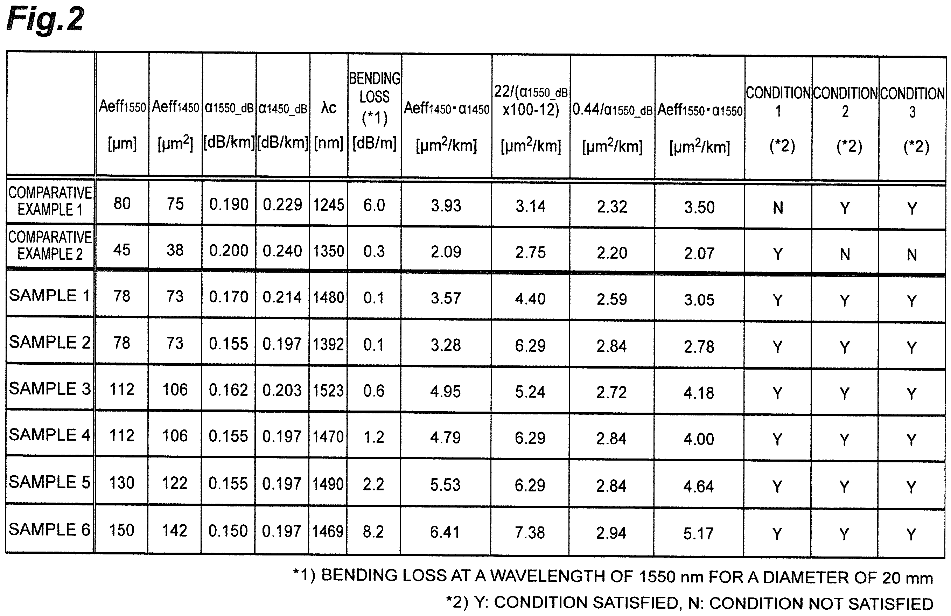

Figs. 2 to 4 are tables which summarize specifications of each of samples of the optical fiber to be used in an optical transmission system according to an embodiment of the present invention and comparative examples. In the tables, comparative example 1 is a standard single mode fiber (SMF) compliant to ITU-T G.652. Comparative example 2 is a dispersion-shift fiber (DSF) compliant to ITU-T G.653.

Fig. 2 shows the characteristics of each of the samples of the optical fibers to be used in an optical transmission system according to an embodiment of the present invention and the comparative examples, in other words, Fig. 2 shows: Aeff₁₅₅₀; Aeff₁₄₅₀; α_{1550_dB}; α_{1450_dB}; a fiber cutoff wavelength λc; a bending loss, with a diameter 20 mm, at a wavelength of 1550 nm; Aeff₁₄₅₀·α₁₄₅₀ (the left member of each of the above Formula (15) and the above Formula (16)); 22/(α_{1550_dB}·100 - 12) (the right member of the above Formula (15)), 0.44/α_{1550_dB} (the right member of the above Formula (16)); Aeff₁₅₅₀·α₁₅₅₀ (the left member of the above Formula (17)); and whether Conditions 1 to 3 are satisfied. The optical fibers of samples 1 to 6 satisfy all of Conditions 1 to 3.

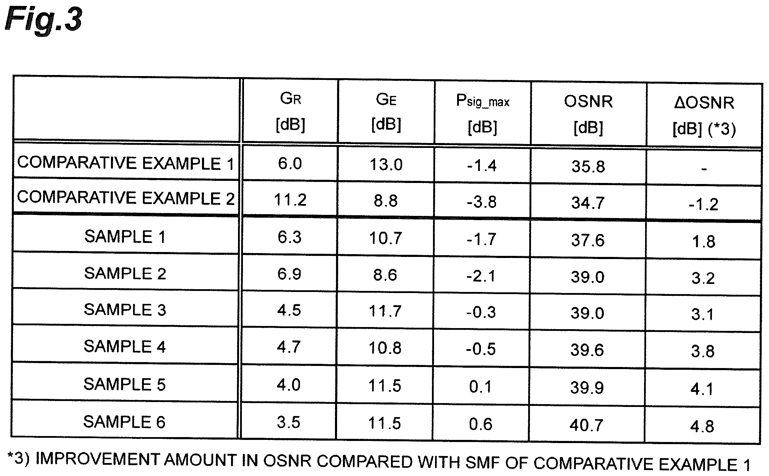

Fig. 3 shows the transmission characteristics when the pumping light power is set to 200 mW and when the signal light is transmitted through the optical fiber transmission line with a span length 100 km for each of the samples of the optical fibers to be used in an optical transmission system according to an embodiment of the present invention and the comparative examples. The OSNRs of the optical fibers of Samples 1 to 6 can be improved by 1.5 dB or more compared with the SMF.

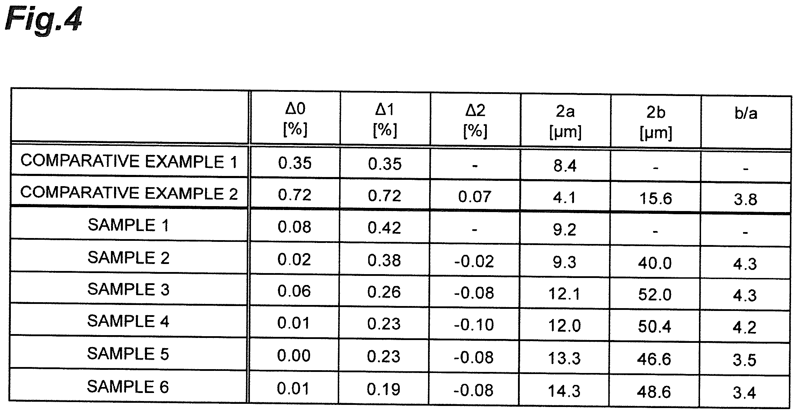

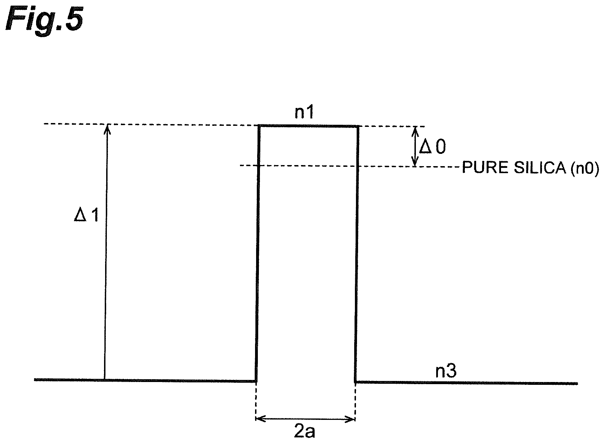

Fig. 4 shows construction parameters of each of the samples of the optical fibers to be used in an optical transmission system according to an embodiment of the present invention and the comparative examples. Fig. 5 is a diagram showing a refractive index profile of an optical fiber of the embodiment. The optical fiber of the sample has: a core with a refractive index of n1 and a diameter 2a [µm]; and a cladding surrounding the core.

A relative refractive index difference of the core with respect to a refractive index n0 of pure silica is represented by Δ0 [%] (the following Formula (18)). The value Δ0 is preferably -0.1% to +0.1%. Condition 1 shows that it is preferable that α₁₄₅₀ be smaller, and it is effective in lowering α₁₄₅₀ to add substantially no impurity to the core through which most of the signal light power goes through.$Δ 0 \left[%\right] = 100 \times \left(n1-n0\right) / n 1$ (18)

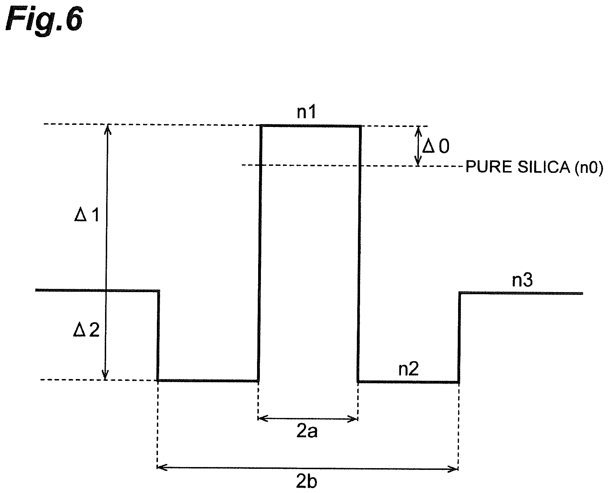

More preferably, an optical fiber of the embodiment has: a core having a refractive index n1 and a diameter 2a [µm] as the refractive index profile shown in Fig. 6; an inner cladding surrounding the core and having a refractive index n2 and a diameter of 2b [µm]; and an outer cladding surrounding the inner cladding and having a refractive index n3. A relative refractive index difference of the core with respect to the outer cladding is represented by Δ1 [%] (the following Formula (19)). A relative refractive index difference of the inner cladding with respect to the outer cladding is represented by Δ2 [%] (the following Formula (20)).$Δ 1 \left[%\right] = 100 \times \left(n1-n3\right) / n 1 ,$ (19) $Δ 2 \left[%\right] = 100 \times \left(n2-n3\right) / n 2 ,$ (20)

Further, it is preferable that the following Formula (21) be satisfied. Conditions 2 and 3 show that it is preferable that Aeff₁₄₅₀ and Aeff₁₅₅₀ be greater, and by using an optical fiber with such a refractive index profile, it is possible to increase Aeff to 100 µm² or more while keeping effective single mode conditions for the signal light and keeping the bending loss at a wavelength of 1550 nm to 20 dB/m or less when the optical fiber is wound to have a diameter of 20 mm.$n 1 > n 3 > n 2$ (21)

Here, the effective single mode conditions mean that the fiber cutoff wavelength λc is 1600 nm or less. By satisfying the conditions, the cable cutoff wavelength can become the signal light wavelength or less (for example, C band: 1530 nm to 1565 nm).

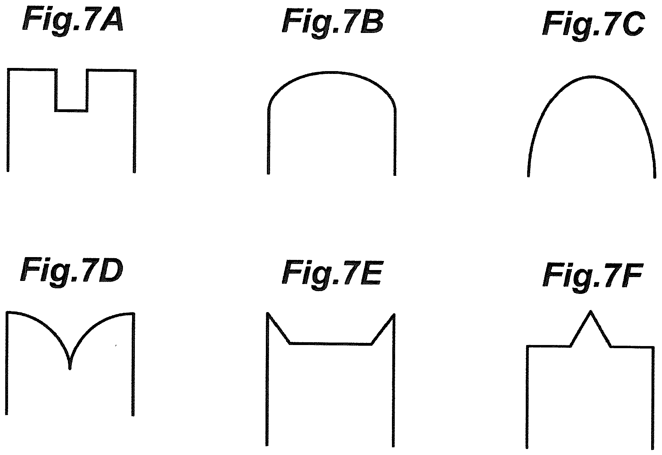

Further, as shown in Figs. 7A to7F, it is possible to variously deform the refractive index profile of the core of a sample (optical fiber) applicable to the optical fiber to be used in an optical transmission system according to an embodiment of the present invention. In such cases, the average value of the refractive index of the core is regarded to be n1.

Fig. 1A shows the configuration of the optical transmission system 1 equipped with the optical fiber transmission line using the optical fiber described above. In the optical transmission system 1, the following Formula (22) is satisfied, where the span length is represented by L [km], and the pumping light power is represented by P_{Pump} [mW]. By satisfying Formula (22), the above Formula (8) shows that G_{E} can be reduced by 1 dB or more in the optical transmission system 1 according to the present invention compared with the optical transmission system using a standard single mode fiber; therefore, it is possible to reduce P_{ASE_EDFA} by 1 dB or more and thus to improve the OSNR.${α}_{SdB} ⋅ L - \frac{0.11}{{Aeff}_{P} ⋅ {α}_{P}} ⋅ {P}_{Pump} < 0.19 L - 0.028 {P}_{Pump} - 1$ (22)

Further, in the optical transmission system 1 according to the present invention, the following Formula (23) is satisfied.
By satisfying Formula (23), the relationship G_{R} < G_{E} is satisfied based on the above Formula (4) and the above Formula (8); thus, it is possible to suppress the increase in P_{ASE_Raman} and thus to improve the OSNR.$\frac{0.11}{{Aeff}_{P} ⋅ {α}_{P}} ⋅ {P}_{Pump} < {α}_{SdB} ⋅ L - \frac{0.11}{{Aeff}_{P} ⋅ {α}_{P}} ⋅ {P}_{Pump}$ (23)

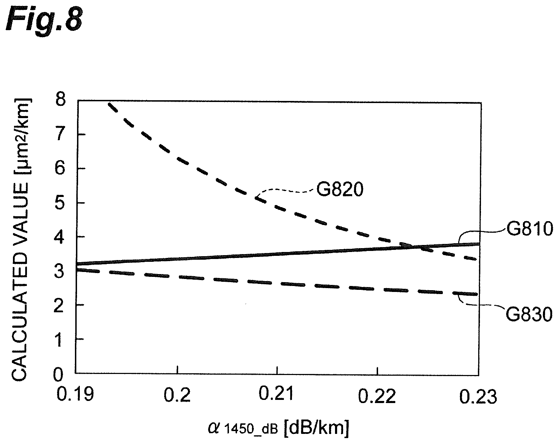

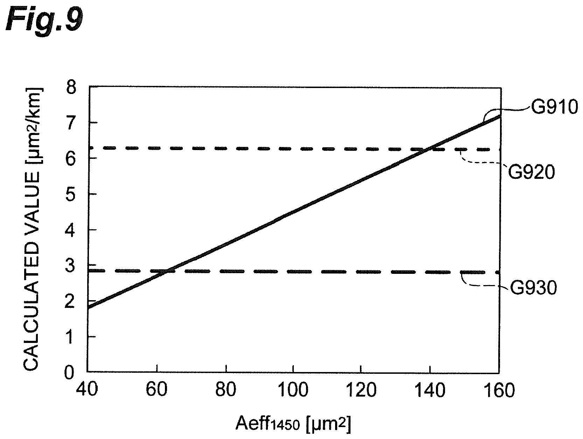

Next, with reference to Figs. 8 and 9, a description will be given on each of appropriate ranges of the transmission loss α_{1450_dB} at a wavelength of 1450 nm and the effective area Aeff₁₄₅₀ at a wavelength of 1450 nm. Note that the prepared optical fibers (which have the refractive index profile shown in Fig. 5 or Fig. 6). Specifically, Fig. 8 is a graph showing the dependency of each of Aeff₁₄₅₀·α₁₄₅₀, 22 / (α_{1550_dB} × 100 - 12), and 0.44 / α_{1550_dB} on α_{1450_dB} under the conditions that Aeff₁₄₅₀ is made to be 73 µm² and α_{1550_dB} is made to be α_{1450_dB} - 0.045 [dB/km]. Further, Fig. 9 is a graph showing the dependency of each of Aeff₁₄₅₀·α₁₄₅₀, 22 / (α_{1550_dB} × 100 - 12), and 0.44 / α_{1550_dB} on Aeff₁₄₅₀ under the condition that α_{1550_dB} is made to be 0.155 dB/km and α₁₄₅₀ is made to be 0.045 dB/km.

Note that Aeff₁₄₅₀·α₁₄₅₀ is represented by graph G810 in Fig. 8 and graph G910 in Fig. 9, which are each the left member of each of the above Formula (15) and Formula (16). The member 22/(α_{1550_dB} × 100 - 12) is the right member of the above Formula (15), where the right member is represented by each of graph G820 in Fig. 8 and graph G920 in Fig. 9. Further, 0.44/α_{1550_dB} is the right member of the above Formula (16), where the right member is represented by each of graph G830 in Fig. 8 and graph G930 in Fig. 9.

As understood from Fig. 8, if α_{1450_dB} is in the range from 0.19 to 0.22 dB/km, Condition 1 represented by the above Formula (15) and Condition 2 represented by the above Formula (16) are satisfied. On the other hand, as understood from Fig. 9, if Aeff₁₄₅₀ is in the range from 60 µm² to 140 µm², Condition 1 and Condition 2 respectively represented by the above Formula (15) and the above Formula (16) are both satisfied.

### Reference Signs List

1: Optical transmission system, 10: Transmitter, 20: Repeater, 21: EDFA, 22: Pumping light source for Raman-amplification, 30: Receiver, 40: Optical fiber

## Claims

1. An optical transmission system (1) comprising:
an optical fiber transmission line including a span from a repeater (20) to a next stage repeater (30), the span consisting of an optical fiber (40), the optical fiber (40) comprising: a core extending along a predetermined axis; and a cladding provided on an outer periphery of the core, each of the core and the cladding being configured to satisfy the following formula: $\frac{0.44}{{α}_{1550 _ dB}} < {Aeff}_{1450} ⋅ {α}_{1450} < \frac{22}{{α}_{1550 _ dB} ⋅ 100 - 12}$ where Aeff₁₄₅₀ [µm²] is an effective area at a wavelength of 1450 nm; α₁₄₅₀ [/km] is a transmission loss at a wavelength of 1450 nm; and α_{1550 dB} [dB/km] is a transmission loss at a wavelength of 1550 nm;
an Er-doped optical fiber amplifier (21) which is configured to amplify signal light transmitted through the optical fiber transmission line; and
a Raman amplifier (22;40) which is configured to Raman-amplify the signal light transmitted through the optical fiber transmission line,
**characterized in that**:
the following formula is satisfied: $\frac{0.11}{{Aeff}_{P} ⋅ {α}_{P}} ⋅ {P}_{Pump} < {α}_{SdB} ⋅ L - \frac{0.11}{{Aeff}_{P} ⋅ {α}_{P}} ⋅ {P}_{Pump} < 0.19 L - 0.028 {P}_{Pump} - 1$ where Aeff_{P} [µm²] is an effective area of the optical fiber at a wavelength of pumping light for Raman amplification; α_{P} [/km] is a transmission loss of the optical fiber transmission line at the wavelength of the pumping light for Raman amplification; α_{SdB} [dB/km] is a transmission loss of the optical fiber transmission line at a signal light wavelength; L is a span length [km] of the optical fiber transmission line; and P_{Pump} [mW] is a pumping light power.

2. The optical transmission system (1) according to claim 1, wherein in the optical fiber (40), each of the core and the cladding is configured to satisfy the following formula: ${Aeff}_{1550} ⋅ {α}_{1550} > 2.2$ where Aeff₁₅₅₀ [µm²] is an effective area at a wavelength of 1550 nm; and α₁₅₅₀ [/km] is a transmission loss at a wavelength of 1550 nm.

3. The optical transmission system (1) according to claim 1, wherein in the optical fiber (40), the transmission loss α_{1550_dB} at a wavelength of 1550 nm is 0.17 dB/km or less.

4. The optical transmission system (1) according to claim 1, wherein in the optical fiber (40), an effective area Aeff₁₅₅₀ at a wavelength of 1550 nm is 70 µm² to 160 µm².

5. The optical transmission system (1) according to any one of claims 1 to 4, wherein in the optical fiber (40), a transmission loss α_{1450_dB} at a wavelength of 1450 nm is 0.19 dB/km to 0.22 dB/km.

6. The optical transmission system (1) according to any one of claims 1 to 4, wherein in the optical fiber (40), the effective area Aeff₁₄₅₀ at a wavelength of 1450 nm is 60 µm² to 140 µm².

7. The optical transmission system (1) according to any one of claims 1 to 6, wherein in the optical fiber (40), a relative refractive index difference of the core with respect to pure silica is -0.1% to +0.1%.

8. The optical transmission system (1) according to claim 7, wherein in the optical fiber (40), a relative refractive index difference of the core with respect to a reference area of the cladding is 0.18% to 0.45%, and a diameter of the core is 9 µm to 15 µm.

9. The optical transmission system (1) according to any one of claims 1 to 8, wherein in the optical fiber (40), a fiber cutoff wavelength is 1600 nm or less.

10. The optical transmission system (1) according to claim 9, wherein in the optical fiber (40), the cladding includes: an inner cladding surrounding the outer periphery of the core; and an outer cladding surrounding an outer periphery of the inner cladding,
wherein a refractive index of the outer cladding is smaller than a refractive index of the core and is greater than a refractive index of the inner cladding.

11. The optical transmission system (1) according to claim 10, wherein in the optical fiber (40), a ratio b/a of a diameter 2a of the core to an outer diameter 2b of the inner cladding is 3.0 to 5.0.

## Patentansprüche

1. Optisches Übertragungssystem (1), umfassend:
eine Glasfaser-Übertragungsstrecke, einschließlich eines Abstandes von einem Repeater (20) zu einem Repeater der nächsten Stufe (30), wobei der Abstand aus einer Glasfaser (40) besteht, wobei die Glasfaser (40) umfasst: einen Kern, der sich entlang einer vorbestimmten Achse erstreckt; und eine Verkleidung, die auf einem äußeren Umfang des Kerns bereitgestellt ist, wobei jeder des Kerns und der Verkleidung konfiguriert ist, um die folgende Formel zu erfüllen: $\frac{0.44}{{∝}_{1550 _ dB}} < {Aeff}_{1450} ⋅ {∝}_{1450} < \frac{22}{{∝}_{1550 _ dB} ⋅ 100 - 12}$ wobei Aeff₁₄₅₀ [µm²] ein effektiver Bereich bei einer Wellenlänge von 1450 nm ist; α₁₄₅₀ [/km] ein Übertragungsverlust bei einer Wellenlänge von 1450 nm ist; und α_{1550 dB} [dB/km] ein Übertragungsverlust bei einer Wellenlänge von 1550 nm ist;
einen Er-dotierten Glasfaserverstärker (21), der konfiguriert ist, um Signallicht zu verstärken, das durch die Glasfaser-Übertragungsstrecke übertragen wird; und
einen Raman-Verstärker (22; 40), der konfiguriert ist, um eine Raman-Verstärkung auf das Signallicht anzuwenden, das durch die Glasfaser-Übertragungsstrecke übertragen wird,
**dadurch gekennzeichnet, dass**:
die folgende Formel erfüllt wird: $\frac{0.11}{{Aeff}_{P} ⋅ {∝}_{P}} ⋅ {P}_{Pump} < {∝}_{SdB} ⋅ L - \frac{0.11}{{Aeff}_{P} ⋅ {∝}_{P}} ⋅ {P}_{Pump} < 0.19 L - 0.028 {P}_{Pump} - 1$ wobei Aeffp [µm²] ein effektiver Bereich der Glasfaser bei einer Wellenlänge von Pumplicht für Raman-Verstärkung ist; α_{P} [/km] ein Übertragungsverlust der Glasfaser-Übertragungsstrecke bei der Wellenlänge des Pumplichts für Raman-Verstärkung ist; α_{SdB} [dB/km] ein Übertragungsverlust der Glasfaser-Übertragungsstrecke bei einer Signallicht-Wellenlänge ist; L eine Abstandslänge [km] der Glasfaser-Übertragungsstrecke ist; und P_{Pump} [mW] eine Pumplichtleistung ist.

2. Optisches Übertragungssystem (1) nach Anspruch 1, wobei in der Glasfaser (40) jeder des Kerns und der Verkleidung konfiguriert ist, um die folgende Formel zu erfüllen: ${Aeff}_{1550} ⋅ {∝}_{1550} > 2.2$ wobei Aeff₁₁₅₀ [µm²] ein effektiver Bereich bei einer Wellenlänge von 1550 nm ist; und α₁₅₅₀ [/km] ein Übertragungsverlust bei einer Wellenlänge von 1550 nm ist.

3. Optisches Übertragungssystem (1) nach Anspruch 1, wobei in der Glasfaser (40) der Übertragungsverlust α_{1550_dB} bei einer Wellenlänge von 1550 nm 0,17 dB/km oder weniger ist.

4. Optisches Übertragungssystem (1) nach Anspruch 1, wobei in der Glasfaser (40) ein effektiver Bereich Aeff₁₅₅₀ bei einer Wellenlänge von 1550 nm 70 µm² bis 160 µm² ist.

5. Optisches Übertragungssystem (1) nach einem der Ansprüche 1 bis 4, wobei in der Glasfaser (40) ein Übertragungsverlust α_{1450_dB} bei einer Wellenlänge von 1450 nm 0,19 dB/km bis 0,22 dB/km ist.

6. Optisches Übertragungssystem (1) nach einem der Ansprüche 1 bis 4, wobei in der Glasfaser (40) der effektive Bereich Aeff₁₄₅₀ bei einer Wellenlänge von 1450 nm 60 µm² bis 140 µm² ist.

7. Optisches Übertragungssystem (1) nach einem der Ansprüche 1 bis 6, wobei in der Glasfaser (40) eine relative Brechungsindexdifferenz des Kerns mit Bezug auf reines Siliziumdioxid -0,1 % bis +0,1 % ist.

8. Optisches Übertragungssystem (1) nach Anspruch 7, wobei in der Glasfaser (40) eine relative Brechungsindexdifferenz des Kerns mit Bezug auf einen Referenzbereich der Verkleidung 0,18 % bis 0,45 % ist und ein Durchmesser des Kerns 9 µm bis 15 µm ist.

9. Optisches Übertragungssystem (1) nach einem der Ansprüche 1 bis 8, wobei in der Glasfaser (40) eine Fasergrenzwellenlänge 1600 nm oder weniger ist.

10. Optisches Übertragungssystem (1) nach Anspruch 9, wobei in der Glasfaser (40) die Verkleidung einschließt: eine innere Verkleidung, die den äußeren Umfang des Kerns umgibt; und eine äußere Verkleidung, die einen äußeren Umfang der inneren Verkleidung umgibt,
wobei ein Brechungsindex der äußeren Verkleidung kleiner als ein Brechungsindex des Kerns ist und größer als ein Brechungsindex der inneren Verkleidung ist.

11. Optisches Übertragungssystem (1) nach Anspruch 10, wobei in der Glasfaser (40) ein Verhältnis b/a eines Durchmessers 2a des Kerns zu einem äußeren Durchmesser 2b der inneren Verkleidung 3,0 bis 5,0 ist.

## Revendications

1. Système de transmission optique (1) comprenant :
une ligne de transmission de fibre optique comprenant un intervalle d'un répéteur (20) à un répéteur de stade suivant (30), l'intervalle étant constitué d'une fibre optique (40), la fibre optique (40) comprenant : une âme s'étendant le long d'un axe prédéterminé ; et une gaine prévue sur une périphérie externe de l'âme, chacune de l'âme et de la gaine étant configurée pour satisfaire la formule suivante : $\frac{0.44}{{α}_{1550 _ dB}} < {Aeff}_{1450} ⋅ {α}_{1450} < \frac{22}{{α}_{1550 _ dB} ⋅ 100 - 12}$ où Aeff₁₄₅₀ [µm²] est une aire effective à une longueur d'onde de 1450 nm ; α₁₄₅₀ [/km] est une perte de transmission à une longueur d'onde de 1450 nm ; et α_{1550 dB} [dB/km] est une perte de transmission à une longueur d'onde de 1550 nm ;
un amplificateur à fibre optique dopée à l'Er (21) qui est configuré pour amplifier la lumière de signal transmise à travers la ligne de transmission de fibre optique ; et
un amplificateur Raman (22 ; 40) qui est configuré pour amplifier par effet Raman la lumière de signal transmise à travers la ligne de transmission de fibre optique,
**caractérisé en ce que** :
la formule suivante est satisfaite : $\frac{0.11}{{Aeff}_{P} ⋅ {α}_{P}} ⋅ {P}_{Pump} < {α}_{SdB} ⋅ L - \frac{0.11}{{Aeff}_{P} ⋅ {α}_{P}} ⋅ {P}_{Pump} < 0.19 L - 0.028 {P}_{Pump} - 1$ où Aeff_{P} [µm²] est une aire effective de la fibre optique à une longueur d'onde de lumière de pompage pour amplification Raman ; α_{P} [/km] est une perte de transmission de la ligne de transmission de fibre optique à la longueur d'onde de la lumière de pompage pour amplification Raman ; α_{SdB} [dB/km] est une perte de transmission de la ligne de transmission de fibre optique à une longueur d'onde de lumière de signal ; L est une longueur d'intervalle [km] de la ligne de transmission de fibre optique; et P_{Pump} [mW] est une puissance de lumière de pompage.

2. Système de transmission optique (1) selon la revendication 1, dans lequel dans la fibre optique (40), chacune de l'âme et de la gaine est configurée pour satisfaire la formule suivante : ${Aeff}_{1550} ⋅ {α}_{1550} > 2.2$ où Aeff₁₅₅₀ [µm²] est une aire effective à une longueur d'onde de 1550 nm ; et α₁₅₅₀ [/km] est une perte de transmission à une longueur d'onde de 1550 mn.

3. Système de transmission optique (1) selon la revendication 1, dans lequel dans la fibre optique (40), la perte de transmission α_{1550_dB} à une longueur d'onde de 1550 nm est de 0,17 dB/km ou moins.

4. Système de transmission optique (1) selon la revendication 1, dans lequel dans la fibre optique (40), une aire effective Aeff₁₅₅₀ à une longueur d'onde de 1550 nm est de 70 nm² à 160 µm².

5. Système de transmission optique (1) selon l'une quelconque des revendications 1 à 4, dans lequel dans la fibre optique (40), une perte de transmission α_{1450_dB} à une longueur d'onde de 1450 nm est de 0,19 dB/km à 0,22 dB/km.

6. Système de transmission optique (1) selon l'une quelconque des revendications 1 à 4, dans lequel dans la fibre optique (40), l'aire effective Aeff₁₄₅₀ à une longueur d'onde de 1450 nm est de 60 nm² à 140 µm².

7. Système de transmission optique (1) selon l'une quelconque des revendications 1 à 6, dans lequel dans la fibre optique (40), une différence d'indice de réfraction relative de l'âme par rapport à la silice pure est de -0,1 % à +0,1 %.

8. Système de transmission optique (1) selon la revendication 7, dans lequel dans la fibre optique (40), une différence d'indice de réfraction relative de l'âme par rapport à une aire de référence de la gaine est de 0,18 % à 0,45 %, et un diamètre de l'âme est de 9 µm à 15 µm.

9. Système de transmission optique (1) selon l'une quelconque des revendications 1 à 8, dans lequel dans la fibre optique (40), une longueur d'onde de coupure de fibre est de 1600 nm ou moins.

10. Système de transmission optique (1) selon la revendication 9, dans lequel dans la fibre optique (40), la gaine inclut : une gaine interne entourant la périphérie externe de l'âme ; et une gaine externe entourant une périphérie externe de la gaine interne,
dans lequel un indice de réfraction de la gaine externe est inférieur à un indice de réfraction de l'âme et est supérieur à un indice de réfraction de la gaine interne.

11. Système de transmission optique (1) selon la revendication 10, dans lequel dans la fibre optique (40), un rapport b/a d'un diamètre 2a de l'âme à un diamètre externe 2b de la gaine interne est de 3,0 à 5,0.
